(19) Europäisches Patentamt
European Patent Office
Office européen des brevets

(11) EP 0 933 272 B1

(12) **EUROPEAN PATENT SPECIFICATION**

(45) Date of publication and mention
of the grant of the patent:
**20.04.2011 Bulletin 2011/16**

(51) Int Cl.:
**B60T 8/1755** (2006.01)

(21) Application number: **99300707.9**

(22) Date of filing: **29.01.1999**

(54) **Vehicle dynamic control system**

Dynamisches Kraftfahrzeugsteuerungssystem

Système de commande de la dynamique de véhicule

(84) Designated Contracting States:
**DE GB**

(72) Inventor: **Matsuno, Koji**
**Mitaka-shi,**
**Tokyo (JP)**

(30) Priority: **29.01.1998 JP 1743198**

(74) Representative: **W.P. Thompson & Co.**
**Coopers Building**
**Church Street**
**Liverpool L1 3AB (GB)**

(43) Date of publication of application:
**04.08.1999 Bulletin 1999/31**

(73) Proprietor: **Fuji Jukogyo Kabushiki Kaisha**
**Tokyo (JP)**

(56) References cited:
**DE-A- 4 328 893      DE-A- 19 505 487**
**DE-A- 19 621 085      US-A- 5 315 295**

## Description

This invention relates to a vehicle dynamic control system, which carries out vehicle dynamic control according to road data recognized thereby.

Currently developed are a variety of vehicle dynamic control techniques, utilizing a navigator or the like. Vehicle dynamic controls such as warning control, deceleration control and so on are carried out according to road data of travelling route in front, which are obtained by processing road map data inputted from the navigator.

In order to carry out such vehicle dynamic controls properly, it is required to accurately detect road data of real road. But road data fidelity to real road can not be guaranteed when detecting road data by processing road map data from the navigator only.

Such technology disclosed by the Japanese Patent Laid-open No.287395/1996 is presented, wherein cameras are installed for determining road pattern which is transformed into road data. The road pattern is determined by projecting and transforming images taken by cameras, being corrected by a road inclination angle and radius curvature imputted from the navigator. Then according to the road data, vehicle dynamic control is carried out.

Image data detected by such sensors as cameras are, however, subject to weather and vehicle running conditions. Therefore, the art disclosed by the Japanese Patent Laid-open

No. 287395/1996 may remarkably degrades possibility to, or can not, obtain precise road data, when the image data suddenly change depending on weather and vehicle running conditions.

In such a case, road data become discontinuous, bringing difficulties in vehicle dynamic control, so that smooth control can not be carried out resulting in not only uncomfortable feeling of a driver but also a risk due to strained control.

In DE-A-13 28 893, the detected vehicle velocity and the measured engine speed are fed to a data processor. A gradient estimation stage is coupled to a control stage via a noise suppression stage responding to noise within one of the monitored operating parameters, to block a false gradient estimation value, the control signal being held the same as before detection of the noise. Preferably, the noise suppression stage is held in operation for a defined interval after the detection of noise. The estimated gradient is preferably used to supply control signal for vehicle automatic transmission and prevents incorrect control in response to false estimation.

In DE-A-195 05 487, an Inboard current motor vehicle geographical position determining apparatus includes a satellite receiver, a computer and a digital road map memory. The computer evaluates the signals which are received from a satellite via the receiver. A memory for geographical vehicle position data is also provided, along with auxiliary or dead reckoning sensing for updating and/or improving the accuracy of the current position. The auxiliary sensing uses measurement values independent of the satellite navigation system and has an optical sensor and image evaluation unit programmed to recognise characteristic visual features of the surroundings of the vehicle's route. The computer accurately determines the position by comparing the detected features with features stored with or derived from the map data.

The present invention provides a vehicle dynamic control system which can carry out smooth and natural control even when road data becomes discontinuous.

In order to achieve the object, a vehicle dynamic control system according to claim 1 comprises:

a road data recognizing means for recognizing road data of a travelling route in front of a vehicle; and
a vehicle dynamic control value calculating means for calculating vehicle dynamic control values based on said road data and running conditions of said vehicle so that movement of said vehicle is controlled,
wherein the road data recognizing means comprises
a 1st (first) road data detecting means for detecting 1st (first) road data based on road map data;
a 2nd (second) road data detecting means for detecting 2nd (second) road data based on road conditions which are detected while running by a camera; and
a road data determining means for determining final road data based on said 1st road data and said 2nd road data, characterized in that
in said vehicle dynamic control value calculating means, once said 2nd road data is judged not reliable, the 2nd road data recognized just before a time when the 2nd road data becomes not reliable is used complementarily, during a predetermined period.

The vehicle dynamic control system according to claim 2 is the vehicle dynamic control system according to claim 1, wherein the road data recognizing means judges that road data recognition becomes not reliable when road data is not available or road data change suddenly.

The vehicle dynamic control system according to Claim 3 is the vehicle dynamic control system according to Claim 1 and Claim 2, wherein said road data detecting means is characterized in that once 2nd road data is judged not reliable, a final road data is determined based on said 2nd road data recognized just before the time when said 2nd road data becomes not reliable and said 1st road data.

The vehicle dynamic control system of claim 4 is the vehicle dynamic control system of claim 1, wherein said vehicle dynamic control value calculating means quits vehicle movement control by said vehicle dynamic control values when said road data recognizing means judges that said 1st road data and said 2nd road data are not the same.

The vehicle dynamic control system according to Claim 5 is the vehicle dynamic control system according to Claim 4, wherein the vehicle dynamic control value calculating means changes gradually the vehicle dynamic control values so that vehicle movement control is restrained when the road data recognising means judges that the 1st road data and the 2nd road data are not same.

The vehicle dynamic control system according to Claim 6 is the vehicle dynamic control system according to Claim 4, wherein the vehicle dynamic control value calculating means resumes gradually the vehicle dynamic control values to proper values corresponding to the road data and vehicle running conditions , when road data are recognized again by the road data recognizing means after the vehicle dynamic control value calculating means changes the vehicle dynamic control values so that vehicle movement control is restrained.

The vehicle dynamic control system according to Claim 7 is the vehicle dynamic control system according to Claims 1 through 6, wherein the vehicle dynamic control value calculating means calculates at least an aimed deceleration of the vehicle.

The vehicle dynamic control system according to Claim 8 is the vehicle dynamic control system according to Claims 1 through 7, wherein the road data comprises at least a distance to the nearest curve.

The vehicle dynamic control system according to Claim 9 is the vehicle dynamic control system according to Claims 1 through 8, wherein the road data comprises at least a radius of curvature of the nearest curve.

The vehicle dynamic control system according to Claim 10 is the vehicle dynamic control system according to Claims 1 through 9, wherein the road data comprises at least a road width of the nearest curve.

By way of example only, a specific embodiment of the present invention will now be described, with reference to the accompanying drawings, in which:-

Fig. 1 is a block diagram showing rough construction of a vehicle dynamic control system equipped with a road data recognizing device;

FIG.2 is an illustration showing construction of a 1st road data detector detecting road data based on data from a navigator;

FIG.3 is an illustration showing how to determine the radius of curvature of a curve;

FIG.4 is an illustration showing how to correct the obtained radius of curvature of the emerging curve;

FIG.5 is an illustration showing examples of node data actually obtained from a navigator;

FIG.6 is a flow chart showing vehicle dynamic control using a road data recognizing device according to the present invention;

FIG.7 is a flow chart showing vehicle dynamic control using a road data recognizing device according to the present invention (continued from FIG.6);

FIG.8 is a flow chart showing vehicle dynamic control using a road data recognizing device according to the present invention (continued from FIG.7);

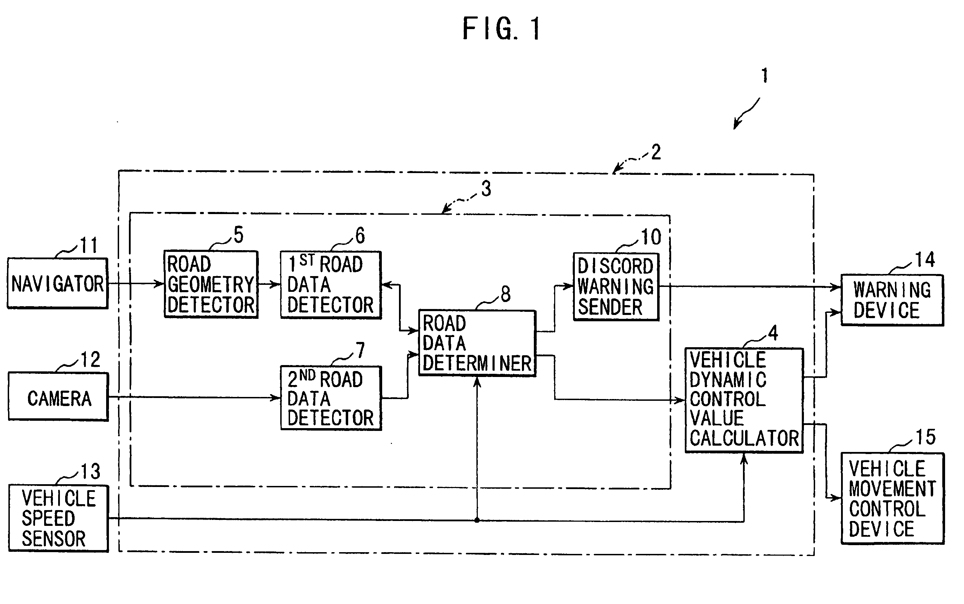

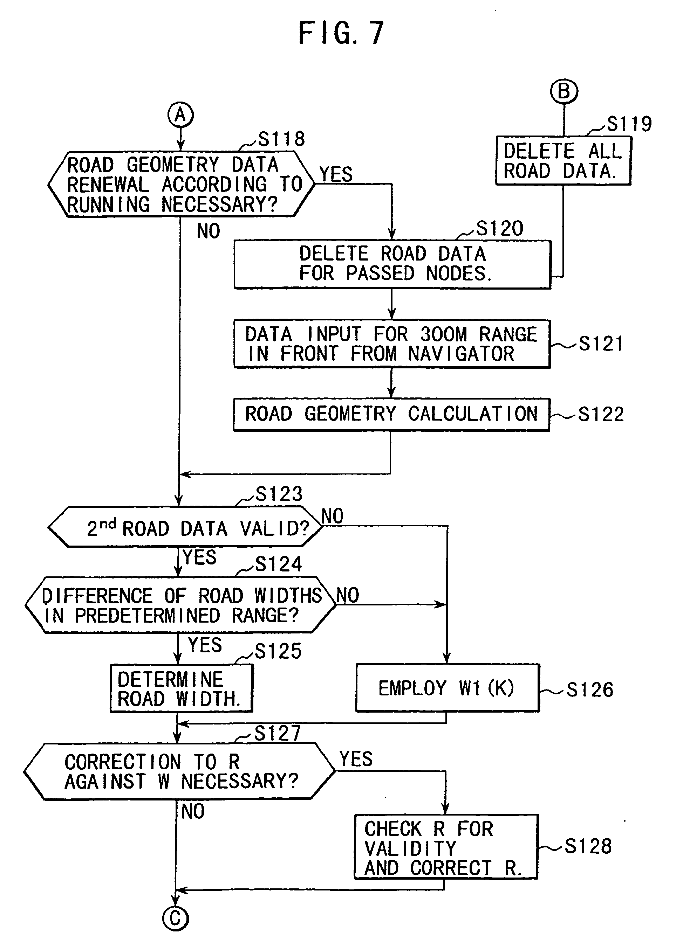

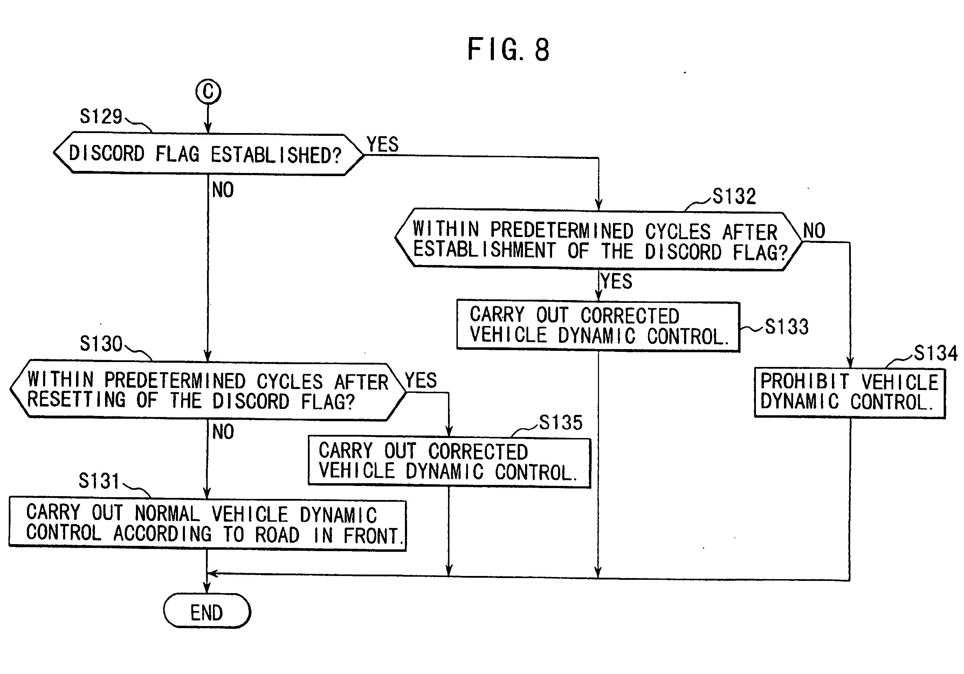

Preferred embodiment of the present invention is described according to the accompanied drawings. Drawings FIG.1 through FIG.8 show an embodiment of the present invention.

FIG.1 is a block diagram showing rough construction of a vehicle dynamic control system equipped with a road data recognizing device.

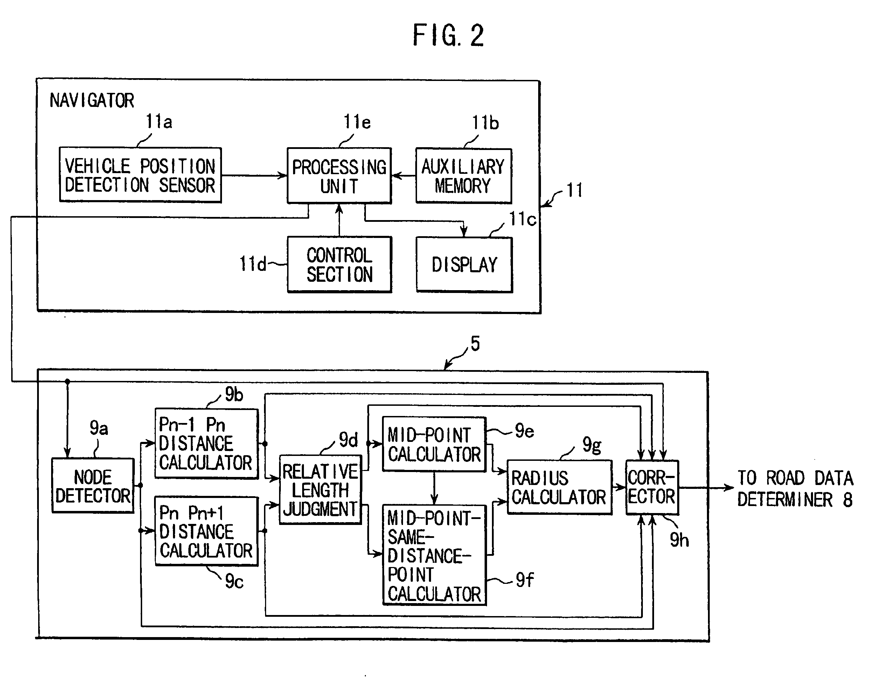

FIG.2 is an illustration showing construction of a 1st road data detector detecting road data based on data from a navigator;

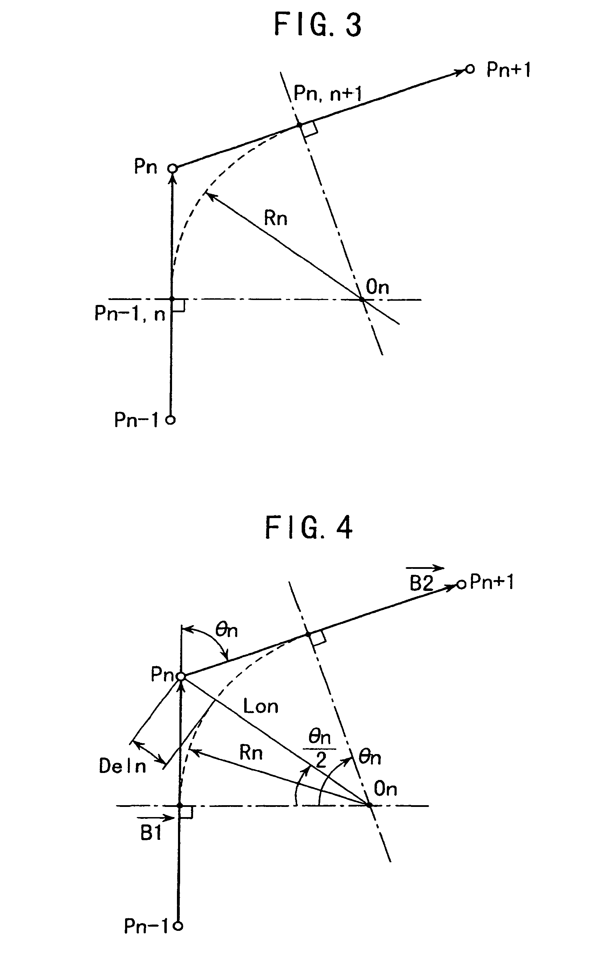

FIG.3 is an illustration showing how to determine the radius of curvature of a curve;

FIG.4 is an illustration showing how to correct the obtained radius of curvature of the emerging curve;

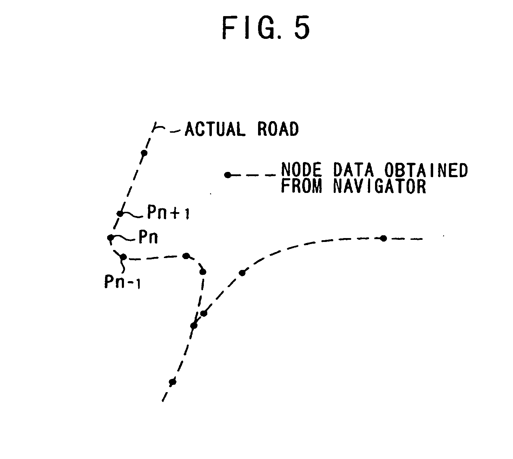

FIG.5 is an illustration showing examples of node data actually obtained from a navigator;

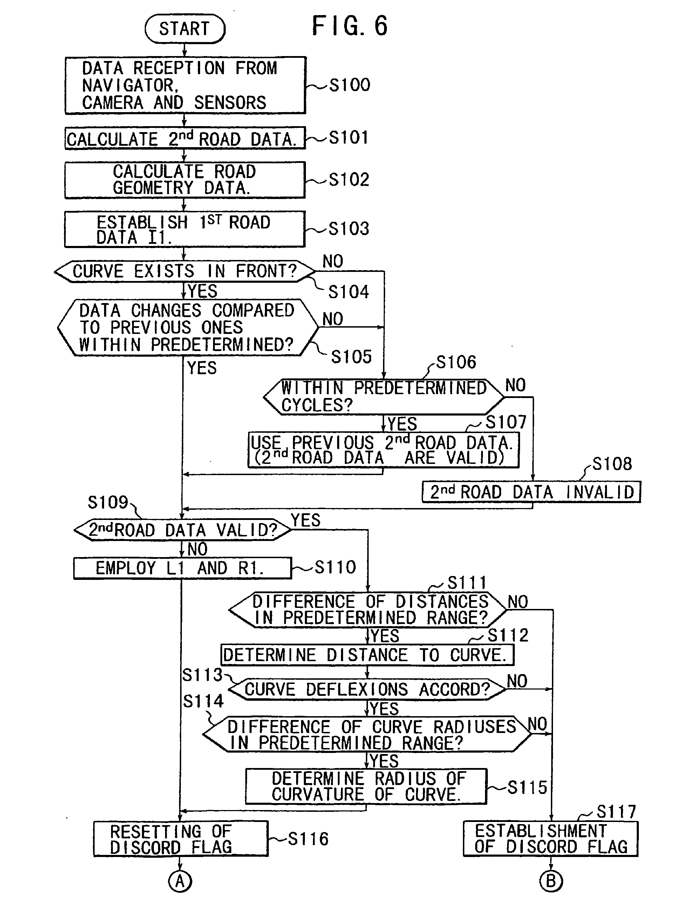

FIG.6 through FIG.8 are flow charts showing vehicle dynamic control using a road data recognizing device according to the present invention;

Referring to FIG.1, cardinal number 1 means a vehicle dynamic control system. A controller 2 of the vehicle dynamic control system 1 consists mainly of a road data recognizer 3 and a vehicle dynamic control value calculator 4.

To the controller 2, a navigator 11 sends road width data and node data, representing road position and inflection, out of road map data and running information such as vehicle position. A camera 12 sends the controller 2 with data representing conditions of a road in front. A vehicle speed sensor 13 sends the controller 2 with signals representing vehicle speed V. A steering wheel angle sensor (not shown), a yaw rate sensor (not shown) and a longitudinal acceleration sensor (not shown) send the controller 2 with steeling wheel angle $\theta H$, yaw rate $\gamma$ and data representing

vehicle running conditions such as longitudinal acceleration respectively.

The controller 2 determines whether the vehicle can pass a curve in front stably enough or not, then gives warnings to the driver by a warning device 14, i.e. a buzzer, a warning voice generator or a warning light, if necessary. In addition to the warning, the controller 2 makes a vehicle movement controller 15 carry out transmission shift down, engine turbo-charging pressure down, fuel cut, complete throttle closing, braking application or increasing braking force.

In general, as shown in FIG. 2, the navigator 11 consists mainly of a vehicle position detection sensor 11a, an auxiliary memory 11b, a display 11c, a control section 11d, and a processing unit 11e.

The vehicle position detection sensor 11a gathers information related to vehicle position. The sensor 11a consists mainly of a GPS (Global Positioning system) receiver to receive positioning signals from GPS satellites so as to determine the position of the vehicle; a geomagnetic sensor to detect running direction of the vehicle; and wheel speed sensors outputting pulse signals synchronized to wheel rotations.

The auxiliary memory 11b is a CD-ROM device, loading a CD -ROM storing road map information including road data and topographical data. The CD-ROM stores road map information in a plurality of hierarchical levels in various scales and further stores road kind information, i.e., motor ways, ordinary national roads and local roads, and passage conditions such as road widths and intersections. Road geometry data included in the road map information consist of node data with given intervals.

Road width data are reduced in several rankings as shown below and then stored;

W1=O : not investigated yet

W1=1 : 0 m < W < 3 m

W1=2 : 3 m < W < 5.5 m

W1=3 : 5.5 m < W < 13 m

W1=4 : 13 m < W

The display 11c is a liquid crystal display which displays maps, the vehicle position (latitude, longitude and altitude), direction, the position of vehicle on the map, and the optimum routing up to a destination.

A touch panel, the control section 11d is integrated in the display 11c (liquid crystal display) to provide control functions such as map scale change and display switching for detailed place name display, area information display and route guidance display.

The processing unit 11e composes the vehicle running information inputted from the vehicle position detection sensor 11a and the road map information registered from the auxiliary memory 11b, while making map matching and other processing. The results are sent to the display 11c following to an operating signal sent from the control section 11d, so as to display the present position of the vehicle, a map of the neighborhood, an optimum route to destination and other information. The node data are outputted to the road data recognizer 2 if necessary.

The camera 12 consists of, for instance, a pair of CCD cameras (not shown), taking a pair of stereoimages of objects in front of the vehicle by stereo photography. The pair of CCD cameras are used as outside object detecting means in this embodiment. Single CCD camera may be used instead of the pair of CCD cameras. Moreover, a super sonic sensor or an infrared sensor may substitutes for the camera 13.

The warning device 14 consists of chimes, a buzzer, a voice warning generator or a warning light or combination of aforementioned. Sound warning, e.g., voice warning "Down the speed for the curve in front." recorded in CD-ROM of the navigator 11 or warning chimes/buzzer, is carried out at level of warning. Voice warning "Braking has been done." and light warning are carried out at level of forced braking.

How to make warning is not limited to the above. It may be selective usage of plural voice warnings for the level of warning and the level of forced braking. Position of a curve to be object for warning or braking control may be guided by voice or displayed by a color on map of the navigator 11.

The vehicle movement controller 15 forms a deceleration controller consisting of, e.g., a transmission controller (not shown), an engine controller (not shown) and a brake controller. The vehicle movement controller 15 carries out one of or combination of the following controls appropriately according to input from the controller 2 at level of forced breaking; turbo charging pressure down by the engine controller, fuel cut, throttle closing control, shift down by the transmission controller, braking application by the brake controller and increasing of braking force.

The road data recognizer 3 mainly consists of a road geometry detector 5, a 1st (first) road data detector 6, a 2nd (second) road data detector 7, road data determiner 8 and a discord warning sender 10. The road data recognizer 3 calculates road data l within a predetermined range, e.g., 300m in front, and outputted the data to the vehicle dynamic control value calculator 4.

A 1st (first) road data detecting means consists of the navigator 11, the road geometry detector 5 and the 1st (first) road data detector 6. The road geometry detector 5 calculates road geometry data of the road in front within a predetermined range, e.g., 300m, based on inputted data from the navigator 11 and sends the road geometry data to the 1st (first) road data detector 6.

The road geometry data include position(Xn,Yn) of representative node Pn; distance Ln between node Pn-l and node Pn; radius of curvature Rn; curve center On; curve angle θn obtained from an angle formed by lines Pn-1 Pn and Pn Pn+1; a distance between node Pn-1 and curve starting point Lsn (the intersection point of line Pn-1 Pn and the perpendicular from the curve center On to line Pn-1 Pn); and distance Lssn from vehicle position to representative node Pn.

As shown in FIG.2, the road geometry detector 5 mainly consists of a node detector 9a, a Pn-1 Pn distance calculator 9b, a Pn Pn+l distance calculator 9c, a relative length judgment 9d, a mid-point calculator 9e, a mid-point-same-distance-point calculator 9f, a radius calculator 9g and a corrector 9h.

As shown in FIG.5, out of the node data inputted from the navigator 11, the node detector 9a registers three consecutive nodes in the traveling direction of the vehicle or on the road selected by the driver, and names them the 1st (first) node Pn-1, the 2nd (second) node Pn and the 3rd (third) node Pn+1, in turn from the closest. From the registered three nodes, the positional information of the 1st (first) and 2nd (second) nodes Pn-l and Pn are outputted to the Pn-1 Pn distance calculator 6b, and the positional information of the 2nd (second) and 3rd (third) nodes, Pn and Pn+l are outputted to the Pn Pn+l distance calculator 6c. Positional data of Pn-1, Pn and Pn+1 are (Xn-1,Yn-1), (Xn,Yn) and (Xn+1,Yn+1) respectively. Pn is the representative node of them. The curve data at points P1, P2, ..., and Pn are calculated by the node combinations of (P0, P1, P2), (P1, P2, P3), ..., and(Pn-1, Pn, Pn+1), respectively.

The Pn-1 Pn distance calculator 9b calculates a straight distance from Pn-l to Pn according to the positional information of Pn-l and Pn inputted from the node detector 9a, and sends the distance datum to the relative length judgment 9d and the corrector 9h.

The Pn Pn+1 distance calculator 9c calculates a straight distance from Pn to Pn+l according to the positional information of Pn and Pn+l inputted from the node detector 9a, and sends the distance datum to the relative length judgment 9d and the corrector 9h.

The relative length judgment 9d compares the straight distance from Pn-l to Pn, inputted from the Pn-1 Pn distance calculator 9b, and the straight distance from Pn to Pn+l, inputted from the Pn Pn+l distance calculator 9c, so as to judge relative length.

Data (position, distance) of the shorter straight distance are sent to the mid-point calculator 9e and the corrector 9h, while data (position, distance) of the longer straight distance are sent to the mid-point-same-distance-point calculator 9f.

When the comparison at the relative length judgment 9d shows equal for the both straight distances, either one can be used. And the straight line connecting Pn-1 and Pn is regarded as the shorter straight line in this case. (The straight line connecting Pn and Pn+l may be regarded as the shorter straight line).

An explanation will follow for the case the straight line connecting Pn-1 Pn is shorter than the straight line connecting Pn and Pn+1.

According to the data (position, distance) of the shorter straight line inputted from the relative length judgment 9d, the mid-point calculator 9e calculates half of the shorter straight distance and determines the mid point position on the shorter straight line.

Here, the mid point of the shorter straight line connecting Pn-l and Pn is named Pn-1,n of which coordinates are represented by (Xn-1, n, Yn-1, n).

$$Pn-1,n = (Xn-1,n \ , \ Yn-1,n)$$

$$= ((Xn-1 + Xn)/2, (Yn-1 + Yn)/2)$$

And the data calculated by the mid-point calculator 9e are sent to the mid-point-same-distance-point calculator 9f and the radius calculator 9g.

According to the data (position, distance) of the longer straight line inputted from the relative length judgment 9d and a half of the shorter straight line distance inputted from the mid-po1nt calculator 9e, the mid-point-same-distance-point calculator 9f determines a mid-point-same-distance-point on the longer straight line at the position in half the distance of the shorter straight line from the 2nd node Pn.

Here, the mid-point-same-distance-point of the longer straight line connecting Pn and Pn+1 is named Pn,n+1, of which coordinates are represented by (Xn,n+1 , Yn,n+1).

$$Pn,n+1 = Pn + Pn\ Pn,n+1$$

$$= (Xn,Yn) + K2(Xn+1 - Xn\ ,\ Yn+1 - Yn)$$

$$= (Xn,n+1\ ,\ Yn,n+1)$$

where,

$$K2 = ((Xn - Xn-1)^2 + (Xn - Yn-1)^2)^{1/2}$$

$$/(2((Xn+1 - Xn)^2 + (Yn+1 - Yn)^2)^{1/2})$$

The positional data of the mid-point-same-distance-point Pn,n+l calculated by the mid-point-same-distance-point calculator 9f are sent to the radius calculator 9g.

According to the positional data of the mid-point Pn-1,n inputted from the mid point calculator 9e and the positional data of a mid-point-same-distance-point Pn,n+l calculated by the mid-point-same-distance-point calculator 9f, the radius calculator 9g, as shown in FIG.3, determines center "On" of the emerging curve on the road by creating the crossing point of a line that lies at right angle to the shorter straight line (here, Pn-1 Pn) at the mid-point Pn-1,n and a line that lies at the right angle to the longer straight line (here, Pn Pn+1) at the mid-point-same-distance-point Pn,n+1. Then, the radius calculator 9g calculates radius of curvature Rn of the curve. The calculation results are sent to the corrector 9h. I.e.,

$$On = Pn-1,n + Pn-1,n\ On$$

$$= (Xn-1,n\ ,\ Yn-1,n) + M(Yn - Yn-1\ ,\ Xn-1 - Xn) \quad ---(1)$$

$$On = Pn,n+1 + Pn,n+1\ On$$

$$= (Xn,n+1\ ,\ Yn,n+1) + N(Yn+1 - Yn\ ,\ Xn - Xn+1) --- (2)$$

Therefore,

$$Xn-1,n + M(Yn - Yn-1) = Xn,n+1 + N(Yn+1 - Yn) \quad ---- (3)$$

$$Yn-1,n + M(Xn-1 - Xn) = Yn,n+1 + N(Xn - Xn+1) \quad ---- (4)$$

Elimination of M from both formulas(3)and(4)can obtain N as shown below:

$$N = ((Xn-1 - Xn)(Xn-1,n - Xn,n+1)$$

$$+ (Yn-1 - Yn)(Yn-1,n - Yn,n+1))$$

$$/(Xn-1 \cdot Yn+1 - Xn+1 \cdot Yn-1 - Xn-1 \cdot Yn + Xn \cdot Yn-1 - Xn \cdot Yn+1 + Xn+1 \cdot Yn)$$

$$---- (5)$$

The position of curve center "On" is:

$$On = (Xon, Yon)$$

$$= (Xn, n+1 + N \cdot Yn+1 - N \cdot Yn \quad , \quad Yn, n+1 + N \cdot Xn - N \cdot Xn+1) --- (6)$$

Therefore, radius of curvature Rn is obtained from the following formula:

$$Rn = ((Xn - Xn-1)(Yn+1 - Yn) - (Xn+1 - Xn)(Yn - Yn-1))/$$

$$| ((Xn - Xn-1)(Yn+1 - Yn) - (Xn+1 - Xn)(Yn - Yn-1)) |$$

$$\cdot ((Xon - Xn-1, n)^2 + (Yon - Yn-1, n)^2)^{1/2} \qquad ----(7)$$

Here, a positive figure of radius of curvature Rn means left turn and a negative figure means right turn.

Distance Lon from curve center On to the representative node of the curve ,i.e., the 2nd node Pn is obtained from the following formula(8):

$$Lon = ((Xon-Xn)^2 + (Yon-Yn)^2)^{1/2} \quad ---(8)$$

The corrector 9h calculates difference Deln between radius of curvature Rn, obtained by the radius calculator 9g, and distance Lon from curve center On to the 2rd node Pn. When the difference Deln exceeds a given error value (to be mentioned later), the corrector 9h corrects radius of curvature Rn so that the difference Deln becomes smaller than the given error value.

Road geometry data for each representative node Pn, which have been corrected by the corrector 9h or left intact because of the difference Deln being smaller than the given error value, are stored.

Here, the road data for representative node Pn include position (Xn,Yn) of representative node Pn; distance Ln between node Pn-1 and node Pn; radius of curvature Rn; curve center On; curve angle θn obtained from an angle formed by lines Pn-1 Pn and Pn Pn+1; a distance between node Pn-1 and curve starting point Lsn(the intersection point of the Pn-1 Pn and the perpendicular from curve center On to line Pn-1 Pn); and distance Lssn from vehicle position to representative node Pn.

The given error value depends on the road with data from the navigator 11 (road width D) and the shorter straight line distance judged by the relative length judgment 9d, thereby being represented as αD. (Here, α is a constant to be set in accordance with the shorter straight line distance, hereinafter referred to as a node interval correction factor.) The road with D is the wider, the bigger the given error value is, resulting in less possibility of correction. That is to represent a reality that a road with is the wider, the bigger a radius of curvature is.

As with node interval correction factor α, the shorter straight line distance is the shorter, the larger the node interval correction factor α is, resulting in less possibility of correction. For example, when the shorter straight line distance is shorter than 20m, α is 1.2, when the shorter straight line distance is middle namely shorter than 100m, α is 0.6, and when the shorter line distance is longer than 100m, α is 0.3. Short intervals of nodes represent that the road is accurately drawn by nodes on the map, i.e., less correction is necessary.

FIG.4 shows a detailed correction to be made by the corrector 9h. The vector from Pn-I to in is denoted by B1, and the vector from Pn to Pn+1 is denoted by B2.

$$B1 = (Xn - Xn-1 \; , \; Yn - Yn-1) = (Xb1, Yb1),$$

$$B2 = (Xn+1 - Xn \; , \; Yn+1 - Yn) = (Xb2, Yb2)$$

An angle $\theta n$ formed by B1 and B2 is as follows:

$$\cos\theta n = (Xb1 \cdot Xb2 + Yb1 + Yb2)/(|B1| \cdot |B2|)$$

Error ratio Pdeln between Lon and Rn is as follows:

$$Pdeln = Rn/Lon$$

$$=\cos(\theta n/2) = ((\cos\theta n + 1)/2)^{1/2} \quad -----(9)$$

Therefore, difference De1n between Lon and Rn is as follows:

$$Deln = Lon - |Rn| = Lon(1-Pdeln)$$

$$= Lon(1 - (\cos\theta n + 1)/2)^{1/2}) \quad ------(10)$$

In this connection, when difference Deln exceeds the given error value($\alpha$D), radius of curvature Rn is corrected so that De1n becomes equal to $\alpha$D.
I.e.,

$$Lon = Deln/(1 - ((\cos\theta n + 1)/2)^{1/2})$$

$$= \alpha D/(1 - ((\cos\theta n + 1)/2)^{1/2})$$

$$= \alpha D/(1 - ((Xb1 \cdot Xb2 + Yb1 \cdot Yb2 + |B1| \cdot |B2|)/(2|B1| \cdot |B2|))^{1/2})$$

$$Rn = Lon \cdot Pdeln = \alpha D/(1 - ((\cos\theta n + 1)/2)^{1/2}) \cdot ((\cos\theta n + 1)/2)^{1/2}$$

$$= \alpha D/((2/(\cos\theta n + 1))^{1/2} - 1)$$

$$= \alpha D/((2|B1ve| \cdot |B2ve|/(Xb1 \cdot Xb2 + Yb1 \cdot Yb2 + |B1ve| \cdot |B2ve|))^{1/2} - 1)$$

$$-----(11)$$

Since road geometry data are obtained from the road geometry detector 5 as described above, data of the nodes even with irregular intervals can be used as they are. Thus the radius of curvature of a road to be traveled on can be determined quickly and accurately by simple calculation without data supplement or complex calculations.

The continuity of radiuses of curvature determined for respective nodes are natural and the obtained data represent accurately an actual load geometry.

Further, when possible calculation errors occur, the calculated radius of curvature always becomes smaller than the actual radius of curvature. This is preferable for a warning/speed down control to make a proper warning when approaching a curve.

With provision of the corrector 9h for the radius of curvature, it is possible to calculate the radius of curvature accurately. Furthermore, provision that makes the given error value variable depending on actual road widths and node intervals can make calculations more accurate.

In other words, in order to represent a reality that a road with is the wider, the bigger a radius of curvature is, it is so set that the road with D is the wider, the bigger the given error value is, resulting in less possibility of correction. In order to reflect a fact that short intervals of nodes represent that the road is accurately drawn by nodes on the map, it is so set that the shorter straight line distance is the shorter, the larger the node interval correction factor a is, resulting in less possibility of correction.

The road geometry data detected by the road geometry detector 5 are sent to the 1st (first) road data detector. The 1st (first) road data detector 6 picks out road geometry data for the nearest curve and calculates L1, a distance to the curve, e.g., a distance from the vehicle to the node representing the curve. The 1st (first) road data detector set 1st road data I1 comprising at least L1 which is the calculated distance to the curve, R1 which is the radius of the curvature of the curve and road with W1.

The 2nd (second) road data detecting means consists of the camera 12 and the 2nd (second) road data detector 7. The 2nd (second) road data detector 7 receives a pair of stereo images of view in front of the car from the camera 12. The 2nd (second) road data detector determines distance data over the entire image field by way of trigonometric calculations according to the deflections of the positions of objects in respective each images, so as to generate a 3D-image showing distances and recognizes the road being traveled on by carrying out a histogram processing of the distance distributions of the 3D-images. Thus the 2nd (second) road data detector send the 2nd (second) road data, which is representing the recognized road, to the road data determiner 8.

When recognizing the road having a curve in front, the 2nd (second) road data detector 7 manages the curve with 2nd (second) road data I2 comprising at least L2 which is a distance to the curve, R2 which is the radius of curvature of the curve and road width W2.

R2, radius of curvature of the curve is designated in 6 rankings in this embodiment for example.

R2=1 : Right curve almost straight ( R2 < -200m )
R2=2 : Mild right curve ( -200m < R2 <-100m )
R2=3 : Tight right curve ( -100m < R2 < 0m )
R2=4 : Tight left curve ( 0m < R2 < 100m )
R2=5 : Mild left curve ( 100m < R2 < 200m )
R2=6 : Left curve almost straight ( 200m < R2 )
R2, radius of curvature of the curve may be expressed in actual figure when it is detectable precisely.

The road data determiner 8, i.e., road data determining means, receives the 1st (first) road data I1 and the 2nd (second) road data I2 from the 1st (first) road data detector 6 and the 2nd (second) road data detector respectively. The road data determiner 8 determines the final road data I based on the 1st and 2nd road data I1 and I2 and sends the final road data to the vehicle dynamic control value calculator 4.

Firstly, the road data determiner 8 judges whether the 2nd (second) road data I2 is valid or not. Cases of invalid are when consideration of L2 reaches judgment that there is no curve in front and when L2 and/or R2 change drastically at a calculation cycle. When they do not resume in a predetermined calculation cycles (e.g., 3 cycles) after the change occurs, the road data of the front curve is judged invalid finally. During the predetermined cycles, the 2nd (second) road data I2 detected just before the change is used complementarily.

When the 2nd (second) road data I2 is valid and when L1 and R1 of the 1st (first) road data I1 and L2 and R2 of the 2nd (second) road data I2 are regarded same (within predetermined ranges), the road data determiner 8 determines road data I which consists of distance L to the curve, radius of curvature R of the curve and road width W.

The distance L, the radius of curvature R and the road width W are determined by taking averages of L1 and L2, R1 and R2 and W1 and W2. How to determine the data is not limited to the above. Larger ones may be employed. More precise data out of the 1st road data and the 2nd road data may also be employed considering preciseness of the road map data of the navigator 11 and detection preciseness of the camera 12.

At the establishment of the final road data I, accord in road widths W1 and W2 within a predetermined range may be used in addition to the comparisons of L1 and L2 and R1 and R2.

The road data determiner 8 does not establish the road data I when discord is observed in either of L1/L2 and R1/R2. Then the road data determiner 8 establishes a discord flag, showing no establishment of road data I and sends a discord signal to the vehicle dynamic control value calculator 4, the 1st (first) road data detector 6 and the discord warning sender 10.

The road data determiner 8 establishes road data I by taking the 1st (first) road data I1, when the 2nd (second) road data I2 are invalid.

When the discord warning sender 10 receives the discord signal from the road data determiner 8, the discord sender 10 sends a discord warning signal so that the warning device 14 sends a discord warning which informs the driver that no road data is recognized. The discord warning is different from a warning to urge the driver to carry out braking.

Thus the road recognizer 3 can exactly recognizes road data of the running route in front because the road data recognizer 3 determines road data I while comparing the 1st (first) road data I1 which are formed based on data inputted from the navigator 11 and the 2nd (second) road data I2 which are formed based on data inputted from the camera 12. Namely, road data detection limit of the navigator 11 can be supplemented. And when there are differences between the stored data in the navigator 11 and the actual road conditions, because road construction is being done or the road has been changed, it can be recognized that data from the navigator 11 are erroneous.

The road data recognizer 3 can obtain road data securely overcoming difficulty due to bad weather or abrupt change of running condition, because the road data recognizer 3 determines road data I based on only the 1st (first) road data I1 when the 2nd (second) road data I2 is invalid.

The road data recognizer 3 does not establish road data I when the 1st (first) road data and the 2nd (second) road data do not fulfill predetermined conditions. Thus recognition of erroneous road data can be avoided and an erroneous control in vehicle dynamic control carried out according to erroneous road data can be prevented.

The vehicle dynamic control value calculator 4 calculates an aimed deceleration At based on inputted data from the road recognizer 3 and various signals representing vehicle running conditions, and makes warning control signals considering actual deceleration of the vehicle against the aimed deceleration At. And the signals are sent to the warning device 14 such as buzzer, voice warning, warning light to urge the driver to carry out vehicle control.

Further, in the case that the actual deceleration is smaller than the aimed deceleration At and forced deceleration is required, the vehicle dynamic control value calculator 4 makes vehicle movement control (speed down control) signal to be sent to the vehicle movement controller 15 to carry out transmission shift down, engine turbo-charging pressure down, fuel cut, complete throttle closing, braking application or increasing of braking force.

The vehicle dynamic control value calculator 4 calculates aimed deceleration At for the following 4 cases according to situation of the discord flag to be established by the road data recognizer 3.

Case 1 --- Discord flag is not established and the predetermined calculation cycles have passed since resetting of a precedent discord flag.

Case 1 represents the following situations;

road data I is continually determined based on only 1st (first) road data I1 from the navigator 11 due to invalid 2nd (second) road data I2 from the camera 12, or road data I is continually determined based on both road data I1 and I2 after a term mentioned later in case 4 has passed because the 2nd (second) road data I2 are valid and in accord with the 1st (first) road data I1.

In this case, the vehicle dynamic control value calculator 4 determines allowable lateral acceleration for the vehicle depending on road surface conditions such as friction $\mu$. Then allowable approaching speed V1, with which the vehicle can pass the curve safely, is determined based on the allowable lateral acceleration and the radius of curvature R of the road data I inputted from the road data determiner 8.

The vehicle dynamic control value calculator 4 calculates required deceleration An, with which the vehicle can reduce the current speed V at a constant deceleration to V1 when reaching the curve entrance, by the following equation based on distance L to the curve, current vehicle speed V and the allowable approaching speed V1 ;

$$V^2 - V1^2 = 2AnL \ ----- \ (12)$$

Then required deceleration An is employed as aimed At.

Case 2 --- Discord flag is established and the predetermined cycles have not passed since establishment of the discord flag.

Case 2 represents a situation just after 1st (first) road data I1 from the navigator 11 discord with 2nd road data I2 from the camera 12.

The vehicle dynamic control value calculator 4 corrects the aimed deceleration At determined in the situation of case 1 just before the establishment of the discord flag so that the At reduces cycle by cycle to 0 (zero) at the end of predetermined calculation cycles, judging that it is impossible to carry out warning control by the warning device and vehicle movement control (speed down control) by the vehicle movement controller according to road data I.

During the correction, the warning control and the vehicle movement control are continued according to the corrected aimed deceleration At.

Case 3 --- Discord flag is established and predetermined calculation cycles have passed since the establishment of the discord flag.

Case 3 represents a situation that 1st road data I1 from the navigator 11 continuously discords with 2nd road data I2 from the camera 12 after the duration of case 2.

The vehicle dynamic control value calculator 4 determines At to 0 (zero) so that the warning control and the vehicle movement control (speed down control) are prohibited.

Case 4 --- Discord flag is reset and predetermined calculation cycles have not passed since the resetting of the discord flag.

Case 4 represents situation just after starting of determining road data I by only 1st road data I1, because of invalidity of 2nd road data I2 from the camera 12, or just after starting of determining road data I based on both rod data I1 and I2 because the 2nd (second) road data I2 is valid and accord with the 1st (first) road data I1.

The vehicle dynamic control value calculator 4 receives road data I. In such a case just after the discord flag is reset, required deceleration An determined based on the inputted road data I is sometimes quite different from At determined just before the discord flag is reset.

The vehicle dynamic control value calculator 4 corrects the aimed deceleration At determined in the preceding cycle by increasing for predetermined cycles gradually to the required deceleration An determined based on the road data I. Then new aimed deceleration At is determined to the corrected aimed deceleration At.

Correction value for the aimed deceleration At determined at precedent calculation cycle is calculated by the following formula;

$$\texttt{Correction value = ( At - An)/( Ncp - Nar)}$$

At: aimed deceleration determined at precedent calculation cycle

An: required deceleration determined at present calculation cycle

Ncp: predetermined calculation cycles

Nar: calculation cycles lapsed since discord flag was reset

The vehicle dynamic control value calculator 4 manages warning control signal and vehicle movement control signal based on the corrected aimed deceleration At and actual deceleration so that warning and vehicle movement controls can be carried out if necessary.

The warning control signal is prepared when the driver decelerate with less than the aimed deceleration At and is sent to the warning control device 14 so that prepared warning is carried out to urge the driver more deceleration corresponding to the aimed deceleration At.

The vehicle movement control signal is prepared when the driver decelerates with less than the aimed deceleration At and is sent to the vehicle movement controller 15 so that prepared vehicle movement control (speed down control) is carried out corresponding to the aimed deceleration At.

Operations to be carried out by the controller 2 having the road data recognizer 3 according to the present invention are explained, referring to flow charts shown in FIG.6 through FIG.8. This program is to be carried out in every 0.1 second.

At Step (hereinafter abbreviated to S) 100, the controller 2 receives data from the navigator 11, the camera 12, vehicle speed sensor 13 and respective sensors (not shown). Then the program goes to S101.

At S101, the 2nd (second) road data detector 7 detects a road in front by distance data processing and histogram processing. When the road has a curve in front, 2nd road data I2 including at least distance L2 from the vehicle to the curve, radius of curvature R and road width W are calculated.

Following to S101, S102 is carried out. At S102, the road geometry detector 5 calculates road geometry data at each node based on vehicle position data and node data inputted from the navigator 11. Then the program goes to S103.

At S103, the 1st (first) road data detector 6 picks out road geometry data for the nearest curve from the road data for each node calculated at S102, and calculates a distance to the curve L1, from the vehicle position to the node representing the curve. The 1st (first) road data detector establishes 1st road data I1 consisting of R1 which is the radius of the curvature of the curve and road with W1 as well as L1 which is the calculated distance to the curve.

S104 through S107 are operations by the road data determiner 8. The road data determiner 8 receives the 1st (first) road data I1 stored in the 1st (first) road data detector 6, the 2nd (second) road data I2 detected by the 2nd (second) road data detector 7 at the S102, vehicle position from the navigator 11 and vehicle speed V from the vehicle speed sensor 13.

At S104, it is judged whether there is any curve in front on the road recognized by the 2nd (second) road data detector or not, i.e., the distance to the curve L2 of the 2nd (second) road data I2 is checked. If yes, goes to S105. If not, goes to S106.

At S105, checked are value changes between the L2 and R2 detected at the present calculation cycle by the 2nd (second) road data detector and L2 and R2 detected at the preceding calculation cycle. It is judged whether the value changes are within predetermined values or not. Namely, the detected data are judged if they are reliable without dropping and variation due to noise. If L2 (distance to the curve) and R2 (radius of curvature of the curve) detected at present cycle do not differ from those detected at preceding cycle beyond predetermined values, it is judged that they are reliable. And after recognizing L2 (distance to the curve) and R2 (Radius of curvature of the curve) as effective, the program goes to S109,

On the other hand, when either of change values of the L2 and R2 compared to those detected at preceding cycle is beyond the predetermined values, it is judged that the data detected at present cycle are not reliable at S105. The program goes to S106.

The judgment on reliability of L2 (distance to the curve) is done by using the following conditional formula;

$$| \ L2(k) \ - \ L2(k-1) \ | \ + \ Vt \ \leqq \ 10 \ m \ --- \quad (12)$$

L2(k): Distance to the curve detected present cycle
L2(k-1) : Distance to the curve detected preceding cycle
V: Vehicle speed
t: cycle interval, 0.1 second

Whether L2(k) and L2(k-1) fulfill the conditions of formula or not is checked.

The judgment on reliability of R2 (radius of curvature of the curve) is done by checking whether or not ranking difference between R2 detected at present cycle and previously detected R2 is one or more. The ranking of R2 is 1 to 6 as explained before.

The checking of reliability of L2 (distance to the curve) and R2 (radius of curvature of the curve) by comparison to those detected at preceding cycle can exclude erroneous data caused by change of running conditions and weather. It is possible to obtain reliable data only.

At S106 as a result of judgment at S104 that no curve exists or judgment at S105 that the 2nd (second) road data I2 are not reliable, checked are how many cycles the situation resulting in no curve existence or not reliable 2nd road data I2 continue. If number of the cycles is not within a predetermined number, e.g., 3, the program goes to S108, then the 2nd road data I2 is judged
as invalid at S108. The program goes to the S109.

On the other hand, when number of the cycles is within predetermined number, e.g., 3, the program goes to S107 where the previous 2nd (second) road data I2 is taken for the present 2nd (second) road data I2 and 2nd (second) road data I2 is judged valid. Then the program goes to S109.

At S109, checked is whether or not the 2nd (second) road data I2 are judged valid. If the 2nd (second) road data I2 are invalid, the program goes to S110. At S110, L1 (distance to the curve) and R1 ( radius of curvature of the curve) based on the 1st (first) road data I1 are employed for distance L and radius R of the final road data I, then goes to S116.

Even when the 2nd (second) road data I2 are invalid, the distance L to the curve and the radius of curvature R of the curve are established based on the 1st (first) road data I1. Namely, when 2nd (second) road data I2 is not obtained due to bad running conditions or weather, the distance L to the curve and the radius of curvature R of the curve can be established.

When the 2nd (second) road data I2 are valid, the program goes to S111. At S111, L1 and L2 are compared. If difference of L1 and L2 is within predetermined range, e.g., 20 m, the program goes to S112.

At S112, distance L to the curve of the final road data I is determined based on L1 and L2, then goes to S113

The distance L to the curve is calculated by the following formula;

$$L \ = \ ( \ L1 \ + \ L2 \ ) \ / \ 2 \quad --- \quad (13)$$

L may be set by taking bigger one of L1 and L2.

At S113, checked is whether or not deflexion angles determined by the 1st (first) road data detector 6 and the 2nd (second) road data detector 7 are in accordance with each other. If yes, goes to S114. At S114, whether radiuses R1 and R2 accord each other within predetermined range or not. If yes, then goes to S115.

At S114, if relations between R1 and R2 are one of the following conditions, it is judged that R1 and R2 accord each other. In other cases, it is judged that R1 and R2 discord.

R1 < -150 m, and R2 = 1
-250 m < R1 < -50 m, and R2 = 2
-150 m < R1 < 0 m, and R2 = 3
0 m < R1 < 150 m, and R2 = 4

50 m < R1 < 250 m, and R2 = 5
150 m < R1, and R2 = 6

At S115, radius R is set for the final road data I based on the R1 and R2, then goes to S116.

Here, R is obtained from average of R1 and R2 for example. Bigger one of the R1 and R2 can be taken for R.

When 2nd (second) road data I2 are valid, distance L and radius R are determined based on the 2nd (second) road data I2 and the 1st (first) road data I1 so that reliable data can be obtained.

At S116, as a result of establishment of L and R for final road data I at S110 or at S115, the program goes to S116. At S116, discord flag is reset, then goes to S 118.

At S117, as a result of judgment at S111 that difference between L1 and L2 is beyond the predetermined range, judgment at S113 that the deflexion angles discord, or judgment at S114 that R1 and R2 do not accord with each other in the predetermined range, discord flag is established, representing discord of 1st (first) road data I1 based on the navigator 11 and 2nd (second) roar data I2 based on the camera 12. Discord signal showing establishment of the discord flag is sent to the vehicle dynamic control value calculator 4 and the 1st (first) road data detector 6 and the discord warning sender 10. Then, the program goes to S124.

The discord warning sender 10 dispatches discord warning to inform the driver of discord of the 1st (first) road data I1 and the 2nd (second) road data I2 through the warning device 14, upon receipt of the discord signal.

Thus, by giving discord warning to driver, the driver is suggested that there is a possibility that erroneous road geometry is stored in the navigator 11 due to road construction or modification of the road or the camera 12 can not take exact image information, resulting in forcing the driver careful operation.

S 118 through S 122 are for the road geometry detector 5. When proceeding to S118 from S116, it is checked whether renewal of the road geometry data is necessary or not at S118.

At S118, it is checked if the first node of node data newly inputted from the navigator 11 accords with the 2nd or after node Pk (k ≠ 1, K=2, 3, 4, ...) previously stored. Then it is judged if the data renewal is necessary or not.

When the first node newly inputted from the navigator 11 accords with the first node P1 currently stored, it is judged not necessary. Currently stored data are left as they are, then goes to S123.

When the first node newly inputted from the navigator 11 accords with the second or after node Pk previously stored, the vehicle has passed nodes P1 through Pk-1 and it is judged the data renewal is necessary. Then the program goes to S 120.

At S120, road geometry data relating to the nodes P1 through Pk-1 are deleted, then goes to S121. But, data of the curve represented by the node Pk-1, i.e., a half of the curve length, radius of curvature Rk-1 and road width Wk-1, are not deleted because the curve still continues after the vehicle passed the node Pk.

At S121, number of the road geometry data after the data deletion and number of node data inputted from the navigator 11 are compared so that the inputted data from the navigator is judged to include new nodes or not. If yes, those new nodes are picked out, then goes to S122.

At A122, road geometry data relating to the new nodes newly picked out are calculated, then goes to S123. The road geometry data include the position(Xn,Yn) of representative node Pn; distance Ln between node Pn-I and node Pn; radius of curvature Rn; curve center On; curve angle θn obtained from an angle formed by lines Pn-1 Pn and Pn Pn+1; a distance between node Pn-1 and the curve starting point Lsn (the intersection point of the line Pn-1 Pn and the perpendicular from curve center On to the line Pn-1 Pn); and distance Lssn from vehicle position to representative node Pn.

At S119, as a result of establishment of discord flag, all of the road geometry data are deleted, then goes to S121. At S121, all data inputted from the navigator are picked out as new data.

S 123 through S 128 are for the road data determiner 8. At S123, the 2nd (second) road data I2 is checked for validity and if valid, goes to S 124.

At S 124, it is checked whether difference between road width W1 of the 1st (first) road data I1 determined at S 103 and road width W2 of the 2rd (second) road data I2 determined at S 101 is within predetermined. If they accord each other, goes to S125, where road width W is determined based on W1 and W2. Then the program goes to S 127.

As for the judgment of accordance of the road widths W1 and W2, if W1 and W2 fall into one of the following four conditions, it is judged that W1 and W2 accord with each other.

W2 < 5 m, and W1 = 1
2 m < W2 < 10 m, and W1 =2
5 m < W2 < 20 m, and W1 =3
10 m < W2 , and W1 = 4

If they fall into other cases, it is judged they discord.

Road width W is determined to average of W1 and W2.

At S 126, as a result of judgment at S 123 that the 2nd (second) road data I2 are invalid or judgment at S 124 that W1 and W2 discord, road width W is determined to the value of W1. Then the program goes to S 127.

At S 127, it is judged whether correction to the radius of curvature R determined at S110 or at S115 is necessary or not according to determination of the road width W at S125 or at S126. If judged yes, goes to S128.

At S128, it is checked if the radius R is reasonable against the road width W and the radius R is corrected. Final road data I including the corrected radius R and the distance L determined at S110 or S112 are sent to the vehicle dynamic control value calculator 4, then the program goes to S129.

When it is judged at S127 that correction to the radius R is not necessary, final road data I including the radius R as it is and distance L are sent to the vehicle dynamic control value calculator 4, then the program goes to S129.

S129 through S134 are for the vehicle dynamic control value calculator 4. At S129, it is judged whether the discord flag is established or not. If yes, goes to S132. If not, i.e., discord flag is reset, goes to S130.

At S132, it is judged whether number of calculation cycles after establishment of the discord flag is within predetermined number or not. If yes, i.e. within the predetermined, goes to S133. If not, i.e., beyond the predetermined, goes to S134.

At S130, it is judged whether number of calculation cycles after resetting of the discord flag is within predetermined number or not. If yes, i.e. within the predetermined, goes to S135. If not, i.e., beyond the predetermined, goes to S131.

When the program reaches S131, having passed through S129 and S130, discord flag has been reset and cycles more than predetermined have passed since the resetting of the discord flag. At S131, the aimed deceleration At is determined based on the road data I and warning control signal and vehicle movement control signal are calculated, then the program goes to an end.

When the program reaches S133, having passed through S129 and S132, discord flag has been established and cycles more than predetermined have not passed since the establishment of the discord flag. At S133, aimed deceleration At is determined by correction to reduce gradually the previously determined At to 0 (zero), and warning control signal and vehicle movement control signal are calculated according to the determined At, then the program goes to an end.

When the program reaches S134, having passed through S129 and S132, discord flag has been established and cycles more than predetermined have passed since the establishment of the discord flag. At S134, aimed deceleration At is determined to 0 (zero) and warning control and vehicle movement control are prohibited.

When the program reaches S135, having passed through S129 and S130, discord flag has been reset and cycles more than predetermined have not passed since the resetting of the discord flag. At S135, aimed deceleration At is determined by correction to increase gradually the previously determined At and warning control signal and vehicle movement control signal are calculated according to the determined At, then the program goes to an end.

When the road data recognizer 3 judges that 1st (first) road data I1 from the navigator 11 and 2nd (second) road data I2 from the camera 12 discord, the vehicle dynamic control value calculator 4 reduces gradually aimed deceleration At to 0 (zero) in the predetermined cycles so that the warning control and the vehicle dynamic control can be prohibited smoothly.

When the discordance of the 1st (first) and 2nd road data are resolved and the warning control and the vehicle movement control are about to be resumed, aimed deceleration At is gradually increased so that they are resumed smoothly.

According to the present invention as explained above, vehicle dynamic control value calculation can be done even when road data are discontinuous so that smooth and natural vehicle dynamic control can be carried out.

While the presently preferred embodiment of the present invention has been shown and described, it is to be understood that this disclosure is for the purpose of illustration and that various changes and modifications may be made without departing from the scope of the invention as set forth in the appended claims.

**Claims**

1.  A vehicle dynamic control system (1) comprising:

    a road data recognizing means (3) or recognizing road data of a travelling route in front of a vehicle; and
    a vehicle dynamic control value calculating means (4) for calculating vehicle dynamic control values based on said road data and running conditions of said vehicle so that movement of said vehicle is controlled,
    wherein the road data recognizing means (3) comprises:

    a 1st road data detecting means (6) for detecting 1st road data based on road map data;
    a 2nd road data detecting means (7) for detecting 2nd road data based on road conditions which are detected while running by a camera (12); and

a road data determining means (8) or determining final road data based on said 1st road data and said 2nd road data,

**characterized in that**

in said vehicle dynamic control value calculating means (4), once said 2nd road data is judged not reliable (S105), the 2nd road data recognized just before a time when the 2nd road data becomes not reliable is used complementarity (S107), during a predetermined period (S106).

2. The vehicle dynamic control system (1) according to claim 1, wherein said road data recognizing means (3) judges that road data recognition becomes not reliable when road data is not available or road data change suddenly.

3. The vehicle dynamic control system (1) according to claim 1 or claim 2, said road data determining means (8) being **characterized in that** once 2nd road data is judged not reliable (S105), a final road data is determined based on said 2nd road data recognized just before the time when said 2nd road data becomes not reliable and said 1st road data.

4. The vehicle dynamic control system (1) according to claim 1, wherein said vehicle dynamic control value calculating means (4) quits vehicle movement control by said vehicle dynamic control values when said road data recognizing means (3) judges that said 1st road data and said 2nd road data are not the same.

5. The vehicle dynamic control system (1) according to claim 4, wherein said vehicle dynamic control value calculating means (4) changes gradually said vehicle dynamic control values so that vehicle movement control is restrained when said road data recognizing means (3) judges that said 1st road data and said 2nd road data are not same.

6. The vehicle dynamic control system (1) according to Claim 4, wherein said vehicle dynamic control value calculating means (4) resumes gradually said vehicle dynamic control values to values corresponding to said road data and vehicle running conditions, when road data are recognized again by said road data recognizing means (3) after said vehicle dynamic control value calculating means (4) changes said vehicle dynamic control values so that vehicle movement control is restrained.

7. The vehicle dynamic control system (1) according to any of claims 1 to 6, wherein said vehicle dynamic control value calculating means (4) calculates at least an aimed deceleration of said vehicle.

8. The vehicle dynamic control system (1) according to any of claims 1 to 7, wherein said road data comprises at least a distance (L1, L2) to the nearest curve.

9. The vehicle dynamic control system (1) according to any of claims 1 to 8, wherein said road data comprises at least a radius (R1, R2) of curvature of the nearest curve.

10. The vehicle dynamic control system (1) according to any of claims 1 to 9, wherein said road data comprises at least a road width (W1, W2) of the nearest curve.

**Patentansprüche**

1. System zur Fahrdynamikregeiung (1), das Folgendes umfasst:

ein Mittel zur Straßendatenerkennung (3) zum Erkennen von Straßendaten einer Fahrstrecke vor einem Fahrzeug; und

ein Mittel zur Berechnung von Fahrdynamik-Regelungswerten (4) zum Berechnen von Fahrdynamik-Regelungswerten basierend auf den genannten Straßendaten und Betriebsbedingungen des genannten Fahrzeugs, so dass die Bewegung des genannten Fahrzeugs geregelt wird,

wobei das Mittel zur Straßendatenerkennung (3) Folgendes umfasst:

ein erstes Mittel zur Straßendatenerfassung (6) zum Erfassen erster Straßendaten basierend auf Straßenkartendaten;

ein zweites Mittel zur Straßendatenerfassung (7) zum Erfassen zweiter Straßendaten basierend auf Straßenbedingungen, die während der Fahrt von einer Kamera (12) erfasst werden; und

ein Mittel zur Straßendatenbestimmung (8) zum Bestimmen endgültiger Straßendaten basierend auf den genannten ersten Straßendaten und den genannten zweiten Straßendaten,

**dadurch gekennzeichnet, dass**

im genannten Mittel zur Berechnung von Fahrdynamik-Regelungswerten (4), wenn die genannten zweiten Straßendaten als nicht zuverlässig beurteilt werden (S105), diejenigen zweiten Straßendaten, die direkt vor einem Zeitpunkt erkannt wurden, zu dem die zweiten Straßendaten nicht zuverlässig wurden, während eines vorherbestimmten Zeitraums (S106) ergänzend verwendet werden (S107).

2. System zur Fahrdynamikregelung (1) nach Anspruch 1, wobei das genannte Mittel zur Straßendatenerkennung (3) urteilt, dass Straßendatenerkennung nicht zuverlässig wird, wenn Straßendaten nicht verfügbar sind oder Straßendaten sich plötzlich ändern.

3. System zur Fahrdynamikregelung (1) nach Anspruch 1 oder Anspruch 2, wobei das genannte Mittel zur Straßendatenbestimmung (8) **dadurch gekennzeichnet ist, dass** wenn zweite Straßendaten als nicht zuverlässig beurteilt werden (S105), endgültige Straßendaten basierend auf denjenigen zweiten Straßendaten, die direkt vor dem Zeitpunkt erkannt wurden, zu dem die genannten zweiten Straßendaten nicht zuverlässig wurden und den genannten ersten Straßendaten bestimmt werden.

4. System zur Fahrdynamikregelung (1) nach Anspruch 1, wobei das genannte Mittel zur Berechnung von Fahrdynamik-Regelungswerten (4) die Regelung der Fahrzeugbewegung durch die genannten Fahrdynamik-Regelungswerte aufgibt, wenn das genannte Mittel zur Straßendatenerkennung (3) urteilt, dass die genannten ersten Straßendaten und die genannten zweiten Straßendaten nicht gleich sind.

5. System zur Fahrdynamikregelung (1) nach Anspruch 4, wobei das genannte Mittel zur Berechnung von Fahrdynamik-Regelungswerten (4) die genannten Fahrdynamik-Regelungswerte allmählich ändert, so dass die Regelung der Fahrzeugbewegung eingeschränkt wird, wenn das genannte Mittel zur Straßendatenerkennung (3) urteilt, dass die genannten ersten Straßendaten und die genannten zweiten Straßendaten nicht gleich sind.

6. System zur Fahrdynamikregelung (1) nach Anspruch 4, wobei das genannte Mittel zur Berechnung von Fahrdynamik-Regelungswerten (4) die genannten Fahrdynamik-Regelungswerte allmählich zu Werten zurückführt, die den genannten Straßendaten und den genannten Fahrzeug-Betriebsbedingungen entsprechen, wenn vom Mittel zur Straßendatenerkennung (3) wieder Straßendaten erkannt werden, nachdem das genannte Mittel zur Berechnung von Fahrdynamik-Regelungswerten (4) die genannten Fahrdynamik-Regelungswerte ändert, so dass die Regelung der Fahrzeugbewegung eingeschränkt ist.

7. System zur Fahrdynamikregelung (1) nach einem der Ansprüche 1 bis 6, wobei das genannte Mittel zur Berechnung von Fahrdynamik-Regelungswerien (4) mindestens eine gezielte Verzögerung des genannten Fahrzeugs berechnet.

8. System zur Fahrdynamikregelung (1) nach einem der Ansprüche 1 bis 7, wobei die genannten Straßendaten mindestens eine Entfernung (L1, L2) zur nächstliegenden Kurve umfassen.

9. System zur Fahrdynamikregelung (1) nach einem der Ansprüche 1 bis 8, wobei die genannten Straßendaten mindestens einen Krümmungsradius (R1, R2) der nächstliegenden Kurve umfassen.

10. System zur Fahrdynamikregelung (1) nach einem der Ansprüche 1 bis 9, wobei die genannten Straßendaten mindestens eine Straßenbreite (W1, W2) der nächstliegenden Kurve umfassen.

## Revendications

1. Un système de commande dynamique de véhicule (1) comprenant :

un moyen de reconnaissance de données routières (3) destiné à reconnaître des données routières d'un itinéraire parcouru devant un véhicule, et

un moyen de calcul d'une valeur de commande dynamique de véhicule (4) destiné à calculer des valeurs de commande dynamique de véhicule basées sur lesdites données routières et conditions de circulation dudit véhicule de façon à commander le déplacement dudit véhicule,

où le moyen de reconnaissance de données routières (3) comprend :

un premier moyen de détection de données routières (6) destiné à détecter des premières données routières basées sur des données de carte routière,

un deuxième moyen de détection de données routières (7) destiné à détecter des deuxièmes données routières basées sur des conditions routières qui sont détectées pendant que le véhicule circule par une caméra (12), et

un moyen de détermination de données routières (8) destiné à déterminé des données routières finales basées sur lesdites premières données routières et lesdites deuxièmes données routières,

**caractérisé en ce que**

dans ledit moyen de calcul d'une valeur de commande dynamique de véhicule (4), si lesdites deuxièmes données routières sont estimées non fiables (S105), les deuxièmes données routières reconnues juste avant un instant où les deuxièmes données routières deviennent non fiables sont utilisées de manière complémentaire (S107) pendant une période prédéterminée (S106).

2. Le système de commande dynamique de véhicule (1) selon la Revendication 1, où ledit moyen de reconnaissance de données routières (3) estime que la reconnaissance de données routières devient non fiable lorsque des données routières ne sont pas disponibles ou que des données routières changent brusquement.

3. Le système de commande dynamique de véhicule (1) selon la Revendication 1 ou 2, ledit moyen de détermination de données routières (8) étant **caractérisé en ce que**, si les deuxièmes données routières sont estimées non fiables, des données routières finales sont déterminées basées sur lesdites deuxièmes données routières reconnues juste avant l'instant où lesdites deuxièmes données routières deviennent non fiables et sur lesdites premières données routières,

4. Le système de commande dynamique de véhicule (1) selon la Revendication 1, où ledit moyen de calcul d'une valeur de commande dynamique de véhicule (4) interrompt la commande de déplacement de véhicule par lesdites valeurs de commande dynamique de véhicule lorsque ledit moyen de reconnaissance de données routières (3) estime que lesdites premières données routières et lesdites deuxièmes données routières ne sont pas identiques.

5. Le système de commande dynamique de véhicule (1) selon la Revendication 4, où ledit moyen de calcul d'une valeur de commande dynamique de véhicule (4) modifie graduellement lesdites valeurs de commande dynamique de véhicule de sorte que la commande de déplacement de véhicule soit restreinte lorsque ledit moyen de reconnaissance de données routières (3) estime que lesdites premières données routières et lesdites deuxièmes données routières ne sont pas identiques.

6. Le système de commande dynamique de véhicule (1) selon la Revendication 4, où ledit moyen de calcul d'une valeur de commande dynamique de véhicule (4) rétablit graduellement lesdites valeurs de commande dynamique de véhicule sur des valeurs correspondant aux dites données routières et conditions de circulation du véhicule, lorsque des données routières sont à nouveau reconnues par ledit moyen de reconnaissance de données routières (3) après que ledit moyen de calcul d'une valeur de commande dynamique de véhicule (4) modifie lesdites valeurs de commande dynamique de véhicule de sorte que la commande de déplacement de véhicule soit restreinte.

7. Le système de commande dynamique de véhicule (1) selon l'une quelconque des Revendications 1 à 6, où ledit moyen de calcul d'une valeur de commande dynamique de véhicule (4) calcule au moins une décélération visée dudit véhicule.

8. Le système de commande dynamique de véhicule (1) selon l'une quelconque des Revendications 1 à 7, où lesdites données routières comprennent au moins une distance (L1, L2) jusqu'au virage le plus proche.

9. Le système de commande dynamique de véhicule (1) selon l'une quelconque des Revendications 1 à 8, où lesdites données routières comprennent au moins un rayon (R1, R2) de courbure du virage le plus proche.

10. Le système de commande dynamique de véhicule (1) selon l'une quelconque des Revendications 1 à 9, où lesdites données routières comprennent au moins une largeur de route (W1, W2) du virage le plus proche.

# FIG. 1

EP 0 933 272 B1

# FIG. 2

NAVIGATOR

11a — VEHICLE POSITION DETECTION SENSOR

11e — PROCESSING UNIT

11b — AUXILIARY MEMORY

11

11d — CONTROL SECTION

11c — DISPLAY

5

9a — NODE DETECTOR

9b — Pn-1 Pn DISTANCE CALCULATOR

9c — Pn Pn+1 DISTANCE CALCULATOR

9d — RELATIVE LENGTH JUDGMENT

9e — MID-POINT CALCULATOR

9f — MID-POINT-SAME-DISTANCE-POINT CALCULATOR

9g — RADIUS CALCULATOR

9h — CORR-ECTOR

TO ROAD DATA DETERMINER 8

# FIG. 3

# FIG. 4

# FIG. 5

ACTUAL ROAD

NODE DATA OBTAINED
FROM NAVIGATOR

$P_{n+1}$

$P_n$

$P_{n-1}$

FIG. 6

START

DATA RECEPTION FROM NAVIGATOR, CAMERA AND SENSORS —S100

CALCULATE 2nd ROAD DATA. —S101

CALCULATE ROAD GEOMETRY DATA. —S102

ESTABLISH 1ST ROAD DATA I1. —S103

CURVE EXISTS IN FRONT? — NO — S104
↓ YES

DATA CHANGES COMPARED TO PREVIOUS ONES WITHIN PREDETERMINED? — NO — S105
↓ YES

S106
WITHIN PREDETERMINED CYCLES? — NO
↓ YES — S107

USE PREVIOUS 2nd ROAD DATA. (2nd ROAD DATA ARE VALID)

S108
2nd ROAD DATA INVALID

S109
2nd ROAD DATA VALID? — YES
↓ NO

EMPLOY L1 AND R1. —S110

S111
DIFFERENCE OF DISTANCES IN PREDETERMINED RANGE? — NO
↓ YES — S112

DETERMINE DISTANCE TO CURVE.

S113
CURVE DEFLEXIONS ACCORD? — NO
↓ YES

S114
DIFFERENCE OF CURVE RADIUSES IN PREDETERMINED RANGE? — NO
↓ YES

DETERMINE RADIUS OF CURVATURE OF CURVE. —S115

RESETTING OF DISCORD FLAG —S116

S117
ESTABLISHMENT OF DISCORD FLAG

Ⓐ                    Ⓑ

# FIG. 7

Ⓐ

S118
ROAD GEOMETRY DATA RENEWAL ACCORDING TO RUNNING NECESSARY? — YES

NO

Ⓑ

S119
DELETE ALL ROAD DATA.

S120
DELETE ROAD DATA FOR PASSED NODES.

S121
DATA INPUT FOR 300M RANGE IN FRONT FROM NAVIGATOR

S122
ROAD GEOMETRY CALCULATION

S123
2nd ROAD DATA VALID? — NO

YES

S124
DIFFERENCE OF ROAD WIDTHS IN PREDETERMINED RANGE? — NO

YES

S125
DETERMINE ROAD WIDTH.

S126
EMPLOY W1(K)

S127
CORRECTION TO R AGAINST W NECESSARY? — YES

NO

S128
CHECK R FOR VALIDITY AND CORRECT R.

Ⓒ

# FIG. 8

Ⓒ

S129 — DISCORD FLAG ESTABLISHED? — YES → 

NO ↓

S132 — WITHIN PREDETERMINED CYCLES AFTER ESTABLISHMENT OF THE DISCORD FLAG? — NO →

YES ↓

S133 — CARRY OUT CORRECTED VEHICLE DYNAMIC CONTROL.

S134 — PROHIBIT VEHICLE DYNAMIC CONTROL.

S130 — WITHIN PREDETERMINED CYCLES AFTER RESETTING OF THE DISCORD FLAG? — YES →

NO ↓

S135 — CARRY OUT CORRECTED VEHICLE DYNAMIC CONTROL.

S131 — CARRY OUT NORMAL VEHICLE DYNAMIC CONTROL ACCORDING TO ROAD IN FRONT.

END

EP 0 933 272 B1

**EP 0 933 272 B1**

## REFERENCES CITED IN THE DESCRIPTION

### Patent documents cited in the description

- JP 8287395 A
- DE 1328893 A
- DE 19505487 A